# EUROPEAN PATENT SPECIFICATION

(11) **EP 3 163 539 B1**
(45) Date of publication and mention of the grant of the patent: **20.02.2019**
(21) Application number: 14896726.8
(22) Date of filing: 08.12.2014
(51) Int. Cl.: G07D 7/16, G07D 5/02, G07D 7/08, G01B 17/02, G01N 29/04, G01N 29/44, G07D 7/164

(54) **THICKNESS DETECTION DEVICE**
DICKENDETEKTIONSVORRICHTUNG
DISPOSITIF DE DÉTECTION D'ÉPAISSEUR

(30) Priority: 30.06.2014 CN 201410309886
(43) Date of publication of application: 03.05.2017
(73) Proprietor: GRG Banking Equipment Co., Ltd., Guangzhou, Guangdong 510663 (CN)
(72) Inventor: LI, Ming, Guangzhou Guangdong 510663 (CN); HUANG, Xiaoqun, Guangzhou Guangdong 510663 (CN)
(74) Representative: LKGLOBAL Lorenz & Kopf PartG mbB Patentanwälte
(86) International application number: PCT/CN2014/093256
(87) International publication number: WO 2016/000405

(56) References cited:
- WO-A1-2007/017663
- CN-A- 1 538 353
- CN-A- 101 788 280
- CN-A- 102 713 501
- CN-A- 103 339 662
- CN-A- 104 050 746
- CN-U- 203 535 713
- CN-U- 203 596 052
- JP-A- 2002 230 619
- JP-A- 2004 083 172
- JP-A- 2014 102 719

## Description

This application claims priority to Chinese Patent Application No. 201410309886.8 titled "THICKNESS DETECTION DEVICE" and filed with the State Intellectual Property Office of People's Republic of China on June 30, 2014,.

### FIELD

The present disclosure relates to the technical field of electronics, particularly to a thickness detection device.

### BACKGROUND

With the diversification of people's life, thickness detection of a sheet medium is gradually put into application, and is applied in more and more fields. For example, an ATM or a paper money sorter in the commercial field needs to perform thickness detection on paper money, to recognize whether there is an abnormal characteristic such as a breakage, a pasted foreign matter or a tear on the paper money. The authenticity of the paper money can be distinguished by sensing a thickness of the paper money as well.

Currently, the thickness detection of a sheet medium is normally performed by splicing signals detected by multiple separate thickness sensors arranged in one row together to obtain a thickness characteristic of a whole banknote, to recognize whether the banknote is abnormal.

WO 2007017663 A1 describes a document inspection system comprising a transport system for transporting documents along transport path through inspection station; and at least one ultrasonic inspection apparatus at the inspection station, the apparatus including ultrasonic transmitting and receiving transducers arranged on opposite sides of the transport path, and a processing system for monitoring ultrasonic signals received by the receiving transducer. The ultrasonic transmitting and receiving transducers are arranged in a staggered manner to prevent detection blind spots along the transport path.

CN 1538353 A describes a paper-like sheet discriminator having reference rollers for detection of thickness of paper-like sheet and detection roller opposing the reference rollers. Thickness of the paper-like sheet is detected from lever displacement. Wavelength components less than specified wavelength are extracted from a signal indicative of thickness of the paper-like sheet passing through respective thickness detection sensors and appearance positions on the paper-like sheet are determined at which extracted wavelength components being less than specified wavelength and having amplitude either not less than or less than constant value appear. The determined appearance positions are collated with stored appearance positions to discriminate genuineness/spuriousness of the paper-like sheet.

CN 203535713 U relates to a device for ultrasonic detection of tapes and overlapping in banknote processing. The device comprises an ultrasonic transmitting unit and an ultrasonic receiving unit. The ultrasonic receiving unit includes a first circuit board and an ultrasonic receiving sensor. The ultrasonic transmitting unit includes a second circuit board and an ultrasonic transmitting sensor. The ultrasonic transmitting unit is corresponding to the ultrasonic receiving unit. The device is quick in detection and high in accuracy without touching banknotes.

However, in measuring with thickness sensors arranged in one row, gaps are required between the thickness sensors, for there will be mutual interferences if the thickness sensors are too close. Thus, these thickness sensors cannot detect an abnormal characteristic such as a foreign matter or a hole if the abnormal characteristic passes through the gaps, thereby resulting in a blind detection zone.

### SUMMARY

A thickness detection device is provided according to embodiments in the present disclosure, to prevent an abnormal characteristic such as a foreign matter or a hole from passing through a gap, so that the thickness detection device does not have a blind detection zone.

The thickness detection device provided according to the embodiments in the present disclosure includes: multiple thickness sensors; a transmitting circuit board and a receiving circuit board; and analyzing module.

The multiple sensors are arranged in two rows in an advancing direction of a sheet medium, and the two rows are arranged in a staggered manner, such that any point on the sheet medium passes through a sensing coverage of the multiple thickness sensors in the advancing direction.

The transmitting circuit board and the receiving circuit board are installed in pair, and an advancing channel for the sheet medium is formed between the transmitting circuit board and the receiving circuit board. The multiple thickness sensors are installed on the transmitting circuit board and the receiving circuit board.

The plurality of thickness sensors comprises transmitting probes and receiving probes. The transmitting probes are installed on the transmitting circuit board, and the receiving probes are installed on the receiving circuit board. The transmitting probes and the receiving probes are installed in a one-to-one correspondence relationship.

The transmitting circuit board is configured to control the transmitting probes to transmit a detection signal, which passes through the sheet medium and is received by the receiving probes as a new detection signal.

The analyzing module is configured to acquire the new detection signal from the receiving circuit board and perform a signal intensity analysis on the new detection signal, to obtain a thickness of the sheet medium based on a relation between signal intensity and thickness.

The N pairs of transmitting probe and receiving probe are divided into X groups each including Y transmitting probes and Y receiving probes, where X multiplied by Y is N. The transmitting probes and the receiving probes in a same group perform transmitting operations and receiving operations synchronously. The X groups of transmitting probes and receiving probes operate in a predetermined group sequence.

Optionally, the transmitting probes include ultrasonic transmitting probes, and the receiving probes include ultrasonic receiving probes.

Optionally, the transmitting circuit board further includes:
Y drive circuits, connected to the Y transmitting probes in each of the X groups respectively and configured to drive the transmitting probes to transmit the detection signal; and
a first one-of-X switch, connected to the X groups of transmitting probes and configured to turn on the transmitting probes in one of the X groups simultaneously in the predetermined group sequence.

Optionally, the receiving circuit board further includes:
N pre-amplification circuits, connected to the N receiving probes respectively and configured to perform preliminary amplification on the new detection signal received by the receiving probes;
Y second one-of-X switches and Y amplifying and shaping circuits, where each of the second one-of-X switches is connected to X of the N pre-amplification circuits and one of the Y amplifying and shaping circuits, and is configured to select the receiving probe belonging to a current group from the X receiving probes connected to the X pre-amplification circuits in the predetermined group sequence; and
where each of the Y amplifying and shaping circuits is configured to perform an amplifying and shaping process on the new detection signal sent by the second one-of-X switch connected to the amplifying and shaping circuit; and
an AD converter, connected to the Y amplifying and shaping circuits and configured to perform an AD conversion on the new detection signal sent by the Y amplifying and shaping circuits and then send the new detection signal on which the AD conversion is performed to the analyzing module.

Optionally, the analyzing module is further configured to determine that there is an abnormal characteristic on the sheet medium if signal intensity of the new detection signal is not within a predetermined intensity interval, where the abnormal characteristic includes a tear, a breakage and a pasted foreign matter on the sheet medium; or the analyzing module is further configured to determine that the sheet medium is defective if an average thickness of the sheet medium is not within a predetermined thickness interval.

It follows from the above technical solutions that, the embodiment in the present disclosure has the advantages as follows.

The thickness detection device provided according to the embodiments in the present disclosure includes multiple thickness sensors which are arranged in two rows in an advancing direction of a sheet medium, and the two rows are arranged in a staggered manner, such that any point on the sheet medium passes through a sensing coverage of the multiple thickness sensors in the advancing direction. In the embodiments in the present disclosure, by arranging the multiple thickness sensors in the thickness detection device in two rows, and arranging the two rows in a staggered manner, any point on the sheet medium passes through a sensing coverage of the multiple thickness sensors in the advancing direction, thereby preventing an abnormal characteristic such as a foreign matter or a hole from passing through a gap, so that the thickness detection device does not have a blind detection zone.

### BRIEF DESCRIPTION OF THE DRAWINGS

Figure 1 is a distribution diagram of a sensing coverage of multiple thickness sensors in a thickness detection device according to an embodiment in the present disclosure;
Figure 2 is a schematic structural diagram of a thickness detection device according to an embodiment in the present disclosure;
Figure 3 is a schematic diagram of arrangement of transmitting probes in a thickness detection device according to an embodiment in the present disclosure;
Figure 4 is an schematic diagram of arrangement of receiving probes in a thickness detection device according to an embodiment in the present disclosure;
Figure 5 is a schematic structural diagram of a transmitting circuit board in a thickness detection device according to an embodiment in the present disclosure;
Figure 6 is a schematic structural diagram of a receiving circuit board in a thickness detection device according to an embodiment in the present disclosure;
Figure 7 is a schematic diagram of a piece of adhesive tape passing through a sensing coverage of one ultrasonic probe;
Figure 8 illustrates sensing waveforms of ultrasonic probes in the case as shown in Figure 7;
Figure 9 is a schematic diagram of a piece of adhesive tape passing through a sensing coverage of two ultrasonic probes; and
Figure 10 illustrates sensing waveforms of ultrasonic probes in the case as shown in Figure 9.

### DETAILED DESCRIPTION

A thickness detection device is provided according to embodiments in the present disclosure, which can prevent an abnormal characteristic such as a foreign matter or a hole from passing through a gap, so that the thickness detection device does not have a blind detection zone.

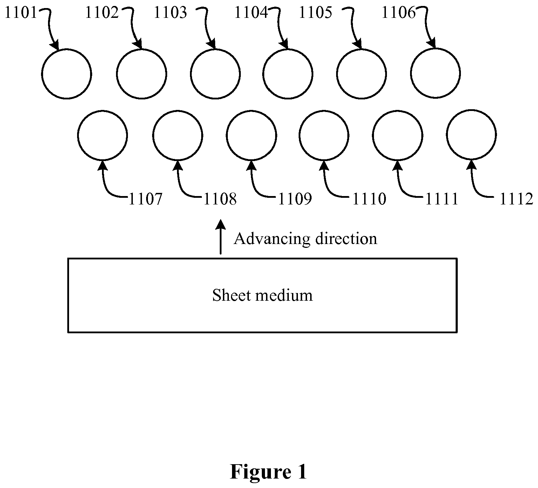

As illustrated in Figure 1, a thickness detection device provided according to an embodiment in the present disclosure includes multiple thickness sensors.

The multiple thickness sensors are arranged in two rows in an advancing direction of a sheet medium, and the two rows are arranged in a staggered manner, such that any point on the sheet medium will pass through a sensing coverage of the multiple thickness sensors in the advancing direction.

It is understood that gaps are required between the multiple thickness sensors, which are not allowed to be too close to avoid interferences between the multiple thickness sensors. The sensing coverage of each of the multiple thickness sensors may be the same as or a little larger than a size of a sensing probe of the thickness sensor. Figure 1 is a distribution diagram of the sensing coverage of the multiple thickness sensors in the thickness detection device, where 1101, 1101, 1103, 1104..., 1111 and 1112 represent a sensing coverage of 12 thickness sensors. As can be seen from Figure 1, 1101, 1101, 1103, 1104..., 1111 and 1112 are arranged in two rows in an advancing direction, and the two rows are arranged in a staggered manner, such that any point on the sheet medium will pass through the sensing coverage in the advancing direction.

It should be noted that the sensing coverage 1101, 1101, 1103, 1104..., 1111 and 1112 is only sensing coverage of 12 thickness sensors in the thickness detection device according to the embodiment. Figure 1 only illustrates one distribution, while there may be other distributions in practice. The number of the multiple thickness sensors in the thickness detection device may be larger than or smaller than 12, which may be designed as needed and is not limited herein.

The thickness detection device provided according to the embodiment includes multiple thickness sensors which are arranged in two rows in an advancing direction of a sheet medium, and the two rows are arranged in a staggered manner, such that any point on the sheet medium will pass through a sensing coverage of the multiple thickness sensors in the advancing direction. In the embodiment, by arranging the multiple thickness sensors in the thickness detection device in two rows and arranging the two rows in a staggered manner, any point on the sheet medium will pass through a sensing coverage of the multiple thickness sensors in the advancing direction, thereby preventing an abnormal characteristic such as a foreign matter or a hole from passing through a gap, so that the thickness detection device does not have a blind detection zone.

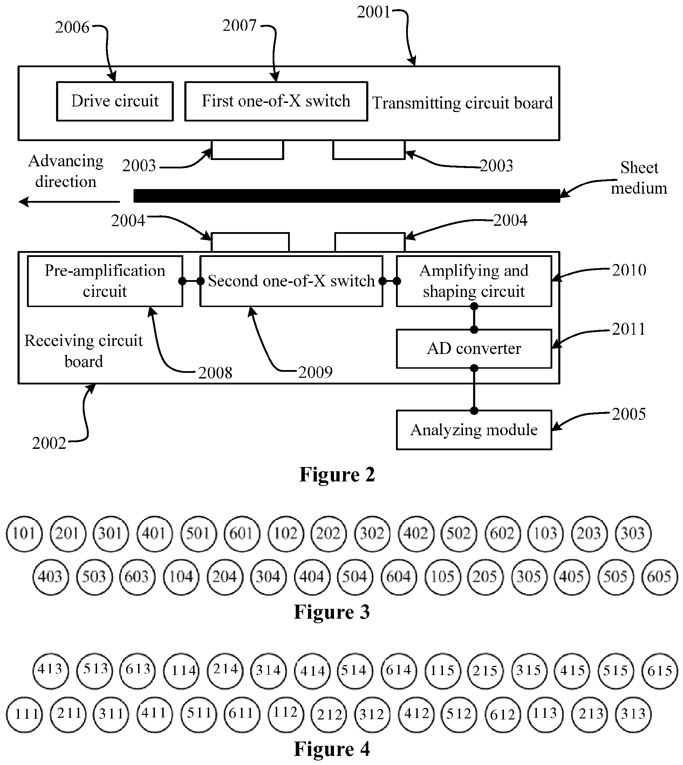

For better understanding, below a thickness detection device provided according to an embodiment in the present disclosure is described in detail. As illustrated in Figure 2, the thickness detection device provided according to another embodiment in the present disclosure includes multiple thickness sensors.

The multiple thickness sensors are arranged in two rows in an advancing direction of a sheet medium, and the two rows are arranged in a staggered manner, such that any point on the sheet medium will pass through a sensing coverage of the multiple thickness sensors in the advancing direction.

The thickness detection device according to the embodiment may further include a transmitting circuit board 2001 and a receiving circuit board 2002.

The transmitting circuit board 2001 and the receiving circuit board 2002 are installed in pair, and an advancing channel for the sheet medium is formed between the transmitting circuit board 2001 and the receiving circuit board 2002.

The multiple thickness sensors are installed on the transmitting circuit board 2001 and the receiving circuit board 2002.

The multiple thickness sensors according to the embodiment may include transmitting probes 2003 and receiving probes 2004.

The transmitting probes 2003 are installed on the transmitting circuit board 2001, and the receiving probes 2004 are installed on the receiving circuit board 2002.

The transmitting probes 2003 and the receiving probes 2004 are installed in a one-to-one correspondence relationship.

It can be understood that a sheet medium passing through the advancing channel can be sensed by the transmitting probes 2003 and the receiving probes 2004 in cooperation with each other.

It should be noted that the transmitting circuit board 2001 is configured to control the transmitting probes 2003 to transmit a detection signal. The detection signal passes through the sheet medium and is received by the receiving probes 2004 as a new detection signal. Since the detection signal has passed through the sheet medium, some properties (for example, signal intensity) of the detection signal may be changed. Therefore, what the receiving probes 2004 received is the changed detection signal, i.e., the new detection signal.

The thickness detection device according to the embodiment in the present disclosure may further include an analyzing module 2005.

The analyzing module 2005 is configured to acquire the new detection signal from the receiving circuit board 2002 and perform a signal intensity analysis on the new detection signal, to obtain a thickness of the sheet medium based on a relation between signal intensity and thickness.

Preferably, the transmitting probes 2003 include ultrasonic transmitting probes, and the receiving probes 2004 include ultrasonic receiving probes.

It should be noted that in the embodiment, N pairs of transmitting probe 2003 and receiving probe 2004 can be divided into X groups each including Y transmitting probes 2003 and Y receiving probes 2004, where X multiplied by Y is N. The transmitting probes 2003 and receiving probes 2004 in a same group perform transmitting operations and receiving operations synchronously; and the X groups of transmitting probes 2003 and receiving probes 2004 operate in a predetermined group sequence. Below it is described with an example how to divide N pairs of transmitting probe 2003 and receiving probe 2004 into X groups and how the X groups of transmitting probes 2003 and receiving probes 2004 operate in a predetermined group sequence.

The transmitting circuit board 2001 according to the embodiment may further include Y drive circuits 2006 and a first one-of-X switch 2007.

The Y drive circuits 2006 are connected to the Y transmitting probes 2003 in each of the X groups respectively and are configured to drive the transmitting probes 2003 to transmit the detection signal.

The first one-of-X switch 2007 is connected to the X groups of transmitting probes 2003 and is configured to turn on the transmitting probes 2003 in one of the X groups simultaneously in the predetermined group sequence. It is understood that the first one-of-X switch 2007 is configured to select among the X groups of transmitting probes 2003, and thus the Y transmitting probes 2003 selected each time belong to a same group.

The receiving circuit board 2002 according to the embodiment may further include N pre-amplification circuits 2008, Y second one-of-X switches 2009, Y amplifying and shaping circuits 2010, and an AD converter 2011.

The N pre-amplification circuits 2008 are connected to the N receiving probes 2004 respectively and are configured to perform preliminary amplification on the new detection received by the receiving probes 2004.

Each of the second one-of-X switches 2009 is connected to X of the N pre-amplification circuits 2008 and one of the Y amplifying and shaping circuit 2010, and is configured to select the receiving probe 2004 belonging to a current group from the X receiving probes 2004 connected to the X pre-amplification circuits in the predetermined group sequence.

Each of the Y amplifying and shaping circuits 2010 is configured to perform an amplifying and shaping process on the new detection signal sent by the second one-of-X switch 2009 connected to the amplifying and shaping circuit.

The AD converter 2011 is connected to the Y amplifying and shaping circuits 2010, and is configured to perform an AD conversion on the new detection signal sent by the Y amplifying and shaping circuits 2010 and then send the new detection signal on which the AD conversion is performed to the analyzing module 2005.

In the embodiment, the analyzing module 2005 is further configured to determine that there is an abnormal characteristic on the sheet medium if signal intensity of the new detection signal is not within a predetermined intensity interval. The abnormal characteristic includes a tear, a breakage and a pasted foreign matter on the sheet medium.

Alternatively, the analyzing module 2005 is further configured to determine that the sheet medium is defective if an average thickness of the sheet medium is not within a predetermined thickness interval. It can be understood that the average thickness may function as a criterion to evaluate a general thickness of the sheet medium. If the average thickness of the sheet medium does not meet a predetermined requirement, i.e., the average thickness of the sheet medium is not within the predetermined thickness interval, the sheet medium is determined to be defective or an unexpected medium. For example, in detecting paper money by an ATM, if an average thickness of the paper money is not within a predetermined thickness interval, it can be determined that a general thickness of the paper money is different from that of normal paper money, and thus the paper money can be determined to be counterfeit money.

For better understanding the embodiment illustrated in Figure 2, below a thickness detection device provided according to an embodiment is described with a practical application example.

It is assumed that 30 pairs of transmitting probe and receiving probe are provided, i.e., there are 30 transmitting probes and 30 receiving probes.

The 30 transmitting probes are arranged in two rows each including 15 transmitting probes, as illustrated in Figure 3. The 30 transmitting probes are divided into 6 groups each including 5 transmitting probes. The grouping result is as follows:
a first group includes transmitting probes 101, 102, 103, 104 and 105;
a second group includes transmitting probes 201, 202, 203, 204 and 205;
a third group includes transmitting probes 301, 302, 303, 304 and 305;
a fourth group includes transmitting probes 401, 402, 403, 404 and 405;
a fifth group includes transmitting probes 501, 502, 503, 504 and 505; and
a sixth group includes transmitting probes 601, 602, 603, 604 and 605.

Similarly, since the transmitting probes and the receiving probes are installed in pairs, the receiving probes are arranged in two rows as well each including 15 receiving probes, as illustrated in Figure 4. The receiving probes are divided into 6 groups each including 5 receiving probes. The grouping result is as follows:
a first group includes receiving probes 111, 112, 113, 114 and 115;
a second group includes receiving probes 211, 212, 213, 214 and 215;
a third group includes receiving probes 311, 312, 313, 314 and 315;
a fourth group includes receiving probes 411, 412, 413, 414 and 415;
a fifth group includes receiving probes 511, 512, 513, 514 and 515; and
a sixth group includes receiving probes 611, 612, 613, 614 and 615.

The transmitting probes and the receiving probes are in a rigorous one-to-one correspondence relationship. In operation, the first group of transmitting probes and the first group of receiving probes operate simultaneously, the second group of transmitting probes and the second group of receiving probes operate simultaneously, the third group of transmitting probes and the third group of receiving probes operate simultaneously, the fourth group of transmitting probes and the fourth group of receiving probes operate simultaneously, the fifth group of transmitting probes and the fifth group of receiving probes operate simultaneously, and the sixth group of transmitting probes and the sixth group of receiving probes operate simultaneously. Transmitting probe 101 corresponds to receiving probe 111, transmitting probe 102 corresponds to receiving probe 112, transmitting probe 103 corresponds to receiving probe 113..., and so on.

In the whole operation process of the thickness detection device, the transmitting probes and the receiving probes are not required to operate all the time. The ultrasonic probes (including the transmitting probes and the receiving probes) each has a property of small detection region. For example, in a case that there is a hole in a detection object (for example, a banknote), assuming that a velocity of the banknote is 1600mm/s and a sensing coverage of a ultrasonic probe is 8mm, it takes 5ms from the banknote entering the sensing coverage of the ultrasonic probe to the banknote moving out of the sensing coverage of the ultrasonic probe. That is, the ultrasonic probe is required to operate only once in the 5ms rather than operating throughout the 5ms, in order to detect the hole. For improving the resolution and determining based on multiple detections, the ultrasonic probes may be designed to detect once every 1.2ms, for example. Currently, it takes less than 200µs for a pair of ordinary ultrasonic probes to detect once. After a detection operation is completed by a group of ultrasonic probes operating synchronously, transmitting probes in the group stop transmitting an ultrasonic wave, and another group of ultrasonic probes are switched to operate. In this way, the 6 groups of ultrasonic probes can be switched to perform transmitting and receiving operations in 1.2ms in a time-sharing manner. By configuring the transmitting probes and the receiving probes to perform transmitting and receiving operations in a time-sharing manner, not only a detection requirement of the thickness detection device can be met, but also a cost on hardware can be saved.

In the embodiment, the group sequence may be from the first group (including the first group of transmitting probes and the first group of receiving probes), then to the second group, then to the third group, then to the fourth group, then to the fifth group, then to the sixth group, and then back to the first group to circulate continuously. In a case of ultrasonic probes, a turn-on time period for each of the groups is about 200µs, and it takes 1.2ms to accomplish a complete double-row sampling. Besides, no transmitting probe or receiving probe is adjacent to another transmitting probe or receiving probe in each of the groups, which greatly reduces interferences caused by adjacency.

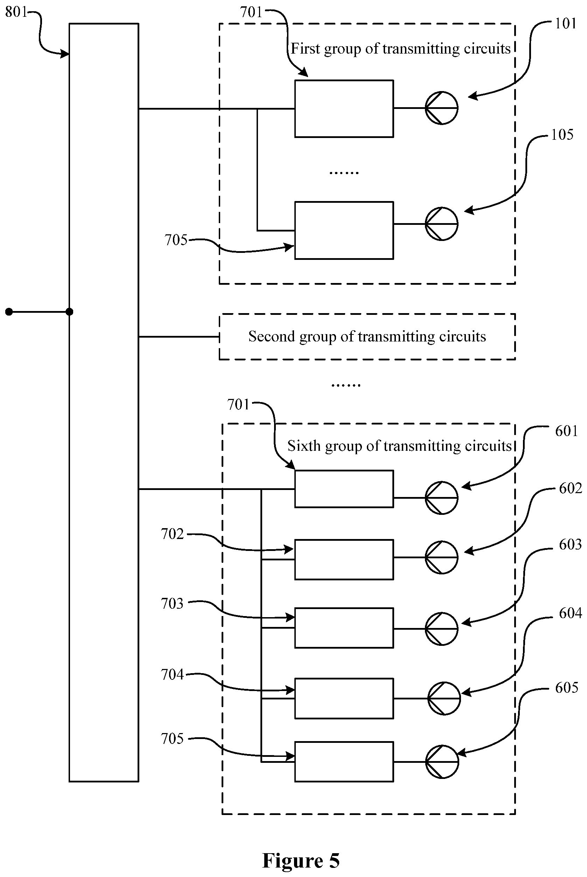

As illustrated in Figure 5, the transmitting circuit board is provided with 5 drive circuits 701, 702, 703, 704 and 705. Drive circuit 701 is configured to drive transmitting probes 101, 201, 301, 401, 501 and 601. Drive circuit 702 is configured to drive transmitting probes 102, 202, 302, 402, 502 and 602. Drive circuit 703 is configured to drive transmitting probes 103, 203, 303, 403, 503 and 603. Drive circuit 704 is configured to drive transmitting probes 104, 204, 304, 404, 504 and 604. Drive circuit 705 is configured to drive transmitting probes 105, 205, 305, 405, 505 and 605.

The transmitting circuit board is further provided with an electronic one-of-six switch 801 which is configured to select one group of transmitting probes from the 6 groups of transmitting probes in the group sequence. Since transmitting probes of only one of the 6 groups operate at a time, the 5 drive circuits are enough for driving the 6 groups of transmitting probes. The 5 drive circuits are configured to drive the group of transmitting probes determined by the electronic one-of-six switch.

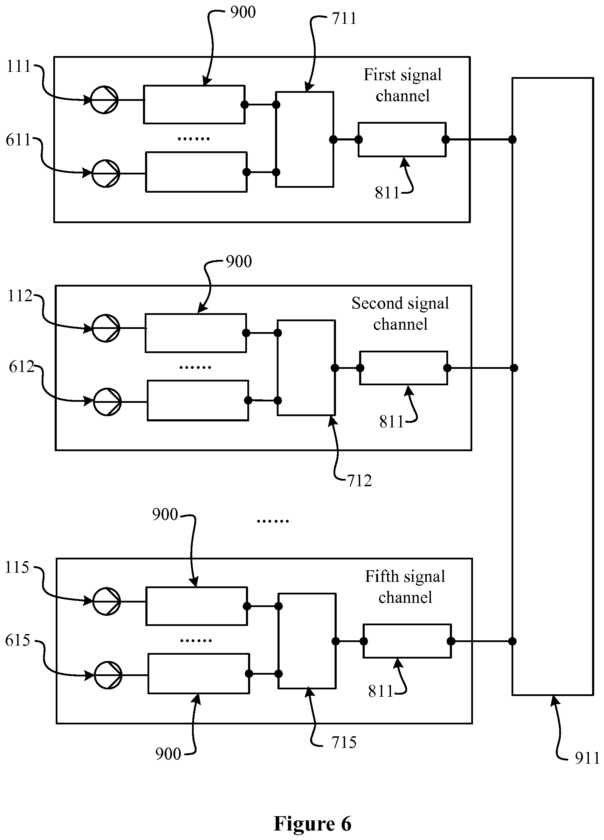

As illustrated in Figure 6, the receiving circuit board is provided with 30 pre-amplification circuits 900 connected to the 30 receiving probes respectively. The receiving circuit board is further provided with 5 electronic one-of-six switches, i.e., switches 711, 712, 713, 714 and 715. Switch 711 is configured to select one from receiving probes 111, 211, 311, 411, 511 and 611. Switch 712 is configured to select one from receiving probes 112, 212, 312, 412, 512 and 612. Switch 713 is configured to select one from receiving probes 113, 213, 313, 413, 513 and 613. Switch 714 is configured to select one from receiving probes 114, 214, 314, 414, 514 and 614. Switch 715 is configured to select one from receiving probes 115, 215, 315, 415, 515 and 615. The 5 electronic one-of-six switches operate in synchronization with the electronic one-of-six switch 801on the transmitting circuit board. If the electronic switch 801 selects the first group of transmitting probes, then switch 711 selects receiving probe 111, switch 712 selects receiving probe 112, switch 713 selects receiving probe 113, switch 714 selects receiving probe 114, and switch 715 selects receiving probe 115. As can be seen, receiving probes 111, 112, 113, 114 and 115 constitute the first group of receiving probes. In this way, the first group of transmitting probes and the first group of receiving probes can operate simultaneously, and the transmitting probes and the receiving probes are synchronous rigorously. The situation in which the electronic switch 801 select the second group, the third group, the fourth group or the fifth group is similar to the above, which is not described herein.

As illustrated in Figure 6, the receiving circuit board is further provided with 5 amplifying and shaping circuits 811 and an AD converter 911. The 5 amplifying and shaping circuits are connected to the 5 electronic one-of-six switches, respectively.

An application scenario that a banknote pasted with a piece of adhesive tape enters the thickness detection device is described below.

For the banknote entering the thickness detection device, the piece of adhesive tape can be detected in the following two cases if the piece of adhesive tape is narrow.

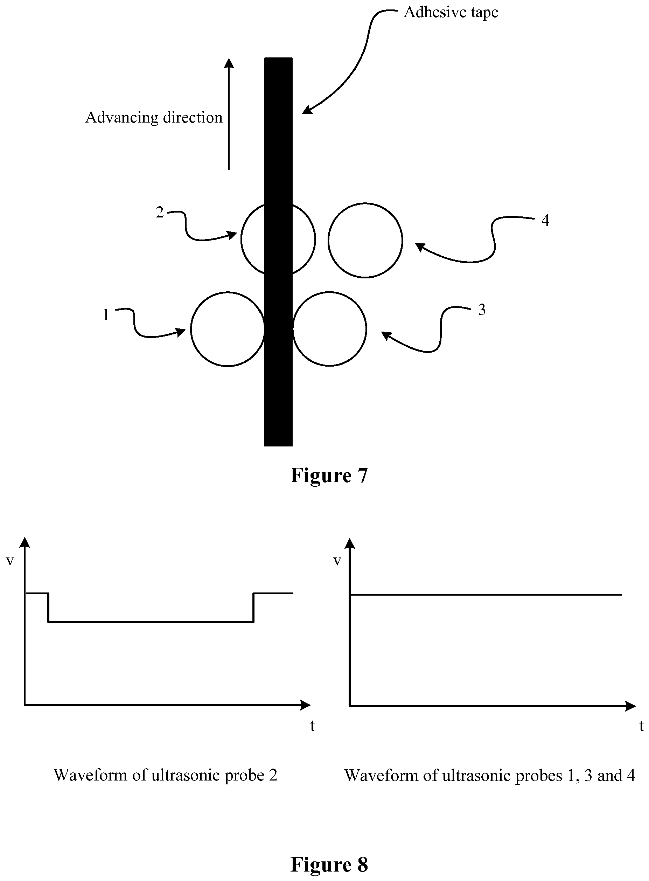

In a first case, the piece of adhesive tape passes through a sensing coverage of only one ultrasonic probe, as illustrated in Figure 7. In this case, sensing waveforms of ultrasonic probes 1, 2, 3 and 4 in Figure 7 are as illustrated in Figure 8. According to Figure 8, the signal intensity of ultrasonic probe 2 is reduced apparently during a certain period of time due to the pass of the piece of adhesive tape. Thus, the analyzing module can determine that a thickness of the banknote is abnormal, and the thickness detection device may alarm and reject the banknote.

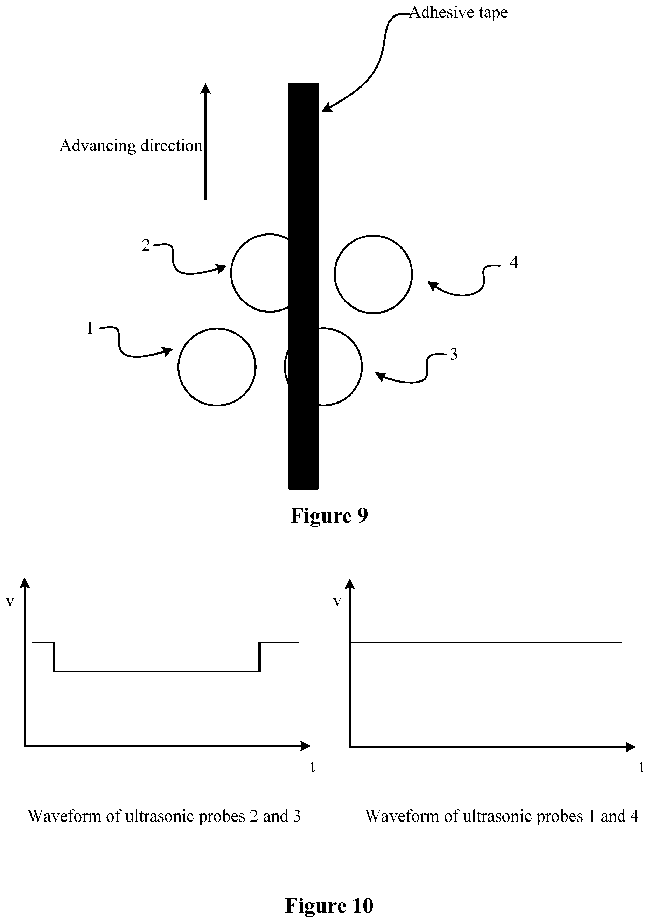

In a second case, the piece of adhesive tape passes through a sensing coverage of two ultrasonic probes, as illustrated in Figure 9. In this case, sensing waveforms of ultrasonic probes 1, 2, 3 and 4 in Figure 9 are as illustrated in Figure 10. According to Figure 10, the signal intensities of ultrasonic probes 2 and 3 are reduced apparently during a certainly period of time due to the pass of the piece of adhesive tape. Thus, the analyzing module can determine that a thickness of the banknote is abnormal, and the thickness detection device may alarm and reject the banknote.

Those skilled in the art can clearly appreciate that, for ease and conciseness of description, reference can be made to corresponding processes in the foregoing method embodiments to understand operating processes of the systems, devices and units described above, which are not described herein.

It should be understood that the systems, devices and methods disclosed with embodiments in the present disclosure may be implemented in other ways. For example, the device embodiments described above are illustrative only. For example, the division of the units is merely a logical function division and there may be other divisions in practical implementations. For example, multiple units or components may be combined or integrated into another system, or some features may be ignored or not performed. In addition, the displayed or discussed mutual couplings or direct couplings or communication connections may be indirect couplings or communication connections implemented through some interfaces, devices or units, and may be implemented in electronic, mechanical or other forms.

The units described as separate parts may or may not be physically separate, and components displayed as units may or may not be physical units, which may be located in one position or distributed on multiple network units. A part or all of the units may be selected as needed to achieve the object of the solutions in the embodiments.

In addition, functional units in the embodiments in the present disclosure may be integrated into one processing unit, or each of the units may exist alone physically, or two or more units are integrated into one unit. The integrated units above may be implemented in the form of hardware, or in the form of software functional units.

In a case that the integrated units are implemented in the form of software functional units and sold or used as a separate product, the integrated units may be stored in a computer readable storage medium. Based on such understanding, essence of the technical solutions in the present disclosure, or the part contributing to the prior art, or all or a part of the technical solutions may be implemented in the form of a software product. The computer software product is stored in a storage medium and includes several instructions for instructing a computer device (which may be a personal computer, a server, or a network device) to perform all or a part of steps of the methods described in the embodiments in the present disclosure. The storage medium includes any medium that can store program codes, such as a U-disk, a removable hard disk, a read-only memory (ROM, Read-Only Memory), a random access memory (RAM, Random Access Memory), a magnetic disk, and an optical disk.

## Claims

1. A thickness detection device, comprising:
a plurality of thickness sensors,
a transmitting circuit board (2001) and a receiving circuit board (2002), and
an analyzing module (2005);
wherein the plurality of thickness sensors are arranged in two rows in an advancing direction of a sheet medium, and the two rows are arranged in a staggered manner, such that any point on the sheet medium passes through a sensing coverage of the plurality of thickness sensors in the advancing direction;
wherein the transmitting circuit board (2001) and the receiving circuit board (2002) are installed in pair, an advancing channel for the sheet medium is formed between the transmitting circuit board (2001) and the receiving circuit board (2002), and the plurality of thickness sensors are installed on the transmitting circuit board (2001) and the receiving circuit board (2002);
wherein the plurality of thickness sensors comprises transmitting probes (2003) and receiving probes (2004), the transmitting probes (2003) are installed on the transmitting circuit board (2001), the receiving probes (2004) are installed on the receiving circuit board (2002), and the transmitting probes (2003) and the receiving probes (2004) are installed in a one-to-one correspondence relationship;
wherein the transmitting circuit board (2001) is configured to control the transmitting probes (2003) to transmit a detection signal, which passes through the sheet medium and is received by the receiving probes (2004) as a new detection signal;
wherein the analyzing module (2005) is configured to acquire the new detection signal from the receiving circuit board (2002) and perform a signal intensity analysis on the new detection signal, to obtain a thickness of the sheet medium based on a relation between signal intensity and thickness; and
wherein the N pairs of transmitting probe (2003) and receiving probe (2004) are divided into X groups each comprising Y transmitting probes (2003) and Y receiving probes (2004), X multiplied by Y is N, the transmitting probes (2003) and the receiving probes (2004) in a same group perform transmitting operations and receiving operations synchronously, and the X groups of transmitting probes (2003) and receiving probes (2004) operate in a predetermined group sequence.

2. The thickness detection device according to claim 1, wherein
the transmitting probes (2003) comprise ultrasonic transmitting probes; and
the receiving probes (2004) comprise ultrasonic receiving probes.

3. The thickness detection device according to claim 1, wherein the transmitting circuit board (2001) further comprises:
Y drive circuits (2006), connected to the Y transmitting probes (2003) in each of the X groups respectively and configured to drive the transmitting probes (2003) to transmit the detection signal; and
a first one-of-X switch (2007), connected to the X groups of transmitting probes (2003) and configured to turn on the transmitting probes (2003) in one of the X groups simultaneously in the predetermined group sequence.

4. The thickness detection device according to claim 3, wherein the receiving circuit board (2002) further comprises:
N pre-amplification circuits (2008), connected to the N receiving probes (2004) respectively and configured to perform preliminary amplification on the new detection signal received by the receiving probes (2004);
Y second one-of-X switches (2009) and Y amplifying and shaping circuits (2010), wherein
each of the second one-of-X switches (2009) is connected to X of the N pre-amplification circuits (2008) and one of the Y amplifying and shaping circuits (2010), and is configured to select the receiving probe (2004) belonging to a current group from the X receiving probes (2004) connected to the X pre-amplification circuits (2008) in the predetermined group sequence; and
each of the Y amplifying and shaping circuits (2010) is configured to perform an amplifying and shaping process on the new detection signal sent by the second one-of-X switches (2009) connected to the amplifying and shaping circuit (2010); and
an AD converter (2011), connected to the Y amplifying and shaping circuits (2010) and configured to perform an AD conversion on the new detection signal sent by the Y amplifying and shaping circuits (2010) and then send the new detection signal on which the AD conversion is performed to the analyzing module (2005).

5. The thickness detection device according to any one of claims 1, 3 and 4, wherein
the analyzing module (2005) is further configured to determine that there is an abnormal characteristic on the sheet medium if signal intensity of the new detection signal is not within a predetermined intensity interval, wherein the abnormal characteristic comprises a tear, a breakage and a pasted foreign matter on the sheet medium; or
the analyzing module (2005) is further configured to determine that the sheet medium is defective if an average thickness of the sheet medium is not within a predetermined thickness interval.

## Patentansprüche

1. Dickenerfassungsvorrichtung, umfassend:
eine Vielzahl von Dickensensoren,
eine übertragende Leiterplatte (2001) und eine empfangende Leiterplatte (2002), und
ein Analysemodul (2005);
wobei die Mehrzahl von Dickensensoren in zwei Reihen in einer Vorschubrichtung eines Blattmediums angeordnet sind und die zwei Reihen in einer versetzten Weise angeordnet sind, so dass jeder Punkt auf dem Blattmedium in der Vorwärtsrichtung durch eine Erfassungsabdeckung der Vielzahl von Dickensensoren hindurchgeht;
wobei die übertragende Leiterplatte (2001) und die empfangende Leiterplatte (2002) paarweise installiert sind, wobei zwischen der übertragenden Leiterplatte (2001) und der empfangenden Leiterplatte (2002) ein Vorschubkanal für das Blattmedium ausgebildet ist und die Vielzahl von Dickensensoren auf der übertragenden Leiterplatte (2001) und der empfangenden Leiterplatte (2002) installiert sind;
wobei die Mehrzahl von Dickensensoren sendende Sonden (2003) und empfangende Sonden (2004) umfasst, wobei die sendenden Sonden (2003) auf der übertragende Leiterplatte (2001) installiert sind und die empfangenden Sonden (2004) auf der empfangenden Leiterplatte (2002) und wobei die sendenden Sonden (2003) und die empfangenden Sonden (2004) in einer Eins-zu-Eins-Korrespondenzbeziehung installiert sind;
wobei die übertragende Leiterplatte (2001) ausgebildet ist, die sendenden Sonden (2003) zu steuern, um ein Detektionssignal zu übertragen, das durch das Blattmedium läuft und von den empfangenden Sonden (2004) als ein neues Detektionssignal empfangen wird;
wobei das Analysiermodul (2005) ausgebildet ist, um das neue Detektionssignal von der empfangenden Leiterplatte (2002) zu erfassen und eine Signalintensitätsanalyse an dem neuen Detektionssignal durchzuführen, um eine Dicke des Blattmediums basierend auf einer Beziehung zwischen der Signalintensität und der Dicke zu erhalten; und
wobei die N Paare aus sendender Sonde (2003) und empfangender Sonde (2004) in X Gruppen unterteilt sind, die jeweils Y sendende Sonden (2003) und Y empfangende Sonden (2004) umfassen, wobei X multipliziert mit Y N ist, wobei die sendenden Sonden (2003) und die empfangenden Sonden (2004) derselben Gruppe Sendeoperationen und Empfangsoperationen synchron ausführen, und wobei die X Gruppen von sendenden Sonden (2003) und empfangenden Sonden (2004) in einer vorbestimmten Gruppensequenz arbeiten.

2. Dickenerfassungsvorrichtung nach Anspruch 1, wobei die sendenden Sonden (2003) Ultraschallsendesonden umfassen; und die empfangenden Sonden (2004) Ultraschallempfängersonden umfassen.

3. Dickenerfassungsvorrichtung nach Anspruch 1 oder 2, wobei die übertragende Leiterplatte (2001) ferner umfasst:
Y Ansteuerschaltungen (2006), die jeweils mit den Y sendenden Sonden (2003) in jeder der X Gruppen verbunden sind und ausgebildet sind, um die sendenden Sonden (2003) anzutreiben, um das Detektionssignal zu senden; und
einen ersten aus X Schaltern (2007), der mit den X Gruppen von sendenden Sonden (2003) verbunden ist und ausgebildet ist, um die sendenden Sonden (2003) in einer der X Gruppen gleichzeitig in der vorbestimmten Gruppensequenz einzuschalten.

4. Dickenerfassungsvorrichtung nach Anspruch 3, wobei die empfangende Leiterplatte (2002) ferner umfasst:
N Vorverstärkungsschaltungen (2008), die jeweils mit den N empfangenden Sonden (2004) verbunden sind und so ausgebildet sind, dass sie eine vorläufige Verstärkung des von den empfangenden Sonden (2004) empfangenen neuen Detektionssignals durchführen;
Y zweite aus X Schaltern (2009) und Y Verstärker- und Formungsschaltungen (2010), wobei
jeder der zweiten aus X Schaltern (2009) mit X der N Vorverstärkungsschaltungen (2008) und einer der Y Verstärkungs- und Formungsschaltungen (2010) verbunden ist und so ausgebildet ist, dass er die empfangende Sonde (2004) auswählt, die zu einer aktuellen Gruppe von den X Empfangssonden (2004) gehören, die mit den X Vorverstärkungsschaltungen (2008) in der vorbestimmten Gruppensequenz verbunden sind; und
jede der Y Verstärkungs- und Formungsschaltungen (2010) ist ausgebildet, um einen Verstärkungs- und Formungsprozess an dem neuen Detektionssignal durchzuführen, das durch den zweiten aus X Schaltern (2009) gesendet wird, der mit der Verstärkungs- und Formungsschaltung (2010) verbunden ist; und
einen AD-Wandler (2011), der mit den Y Verstärkungs- und Formungsschaltungen (2010) verbunden ist und ausgebildet ist, um eine AD-Umwandlung des von den Y Verstärkungs- und Formungsschaltungen (2010) gesendeten neuen Detektionssignals durchzuführen und dann das neue Detektionssignal, an dem die AD-Konvertierung durchgeführt wird, zum Analysemodul (2005) zu senden.

5. Dickenerfassungsvorrichtung nach einem der Ansprüche 1, 3 und 4, wobei
das Analysiermodul (2005) ist ferner ausgebildet, um zu bestimmen, dass eine abnormale Eigenschaft auf dem Blattmedium vorliegt, wenn die Signalintensität des neuen Detektionssignals nicht innerhalb eines vorbestimmten Intensitätsintervalls liegt, wobei die abnormale Eigenschaft einen Riss, einen Bruch und ein Einfügen von Fremdmaterial auf dem Blattmedium umfasst; oder
das Analysiermodul (2005) ist ferner ausgebildet, um zu bestimmen, dass das Blattmedium fehlerhaft ist, wenn eine durchschnittliche Dicke des Blattmediums nicht innerhalb eines vorbestimmten Dickenintervalls liegt.

## Revendications

1. Dispositif de détection d'épaisseur, comprenant:
une pluralité de capteurs d'épaisseur,
une carte de circuit d'émission (2001) et une carte de circuit de réception (2002), et
un module d'analyse (2005);
dans lequel la pluralité de capteurs d'épaisseur est disposée en deux rangées dans une direction d'avance d'un support en feuille, et les deux rangées sont agencées en quinconce, de sorte que tout point sur le support en feuille traverse une couverture de détection de la pluralité de capteurs d'épaisseur dans la direction d'avancement;
dans lequel la carte de circuit d'émission (2001) et la carte de circuit de réception (2002) sont installées en paire, un canal d'avance pour le support de feuille est formé entre la carte de circuit d'émission (2001) et la carte de circuit de réception (2002), et les capteurs d'épaisseur sont installés sur la carte de circuit d'émission (2001) et la carte de circuit de réception (2002);
dans lequel la pluralité de capteurs d'épaisseur comprend des sondes d'émission (2003) et des sondes de réception (2004), les sondes d'émission (2003) sont installées sur la carte de transmission (2001), les sondes de réception (2004) sont installées sur la carte de réception (2002), et les sondes d'émission (2003) et les sondes de réception (2004) sont installées dans une relation de correspondance un-à-un;
dans lequel la carte de circuit d'émission (2001) est configurée pour commander les sondes d'émission (2003) pour transmettre un signal de détection, qui traverse le support de feuille et est reçu par les sondes de réception (2004) comme un nouveau signal de détection;
dans lequel le module d'analyse (2005) est configuré pour acquérir le nouveau signal de détection de la carte de réception (2002) et effectuer une analyse d'intensité de signal sur le nouveau signal de détection, pour obtenir une épaisseur du support en feuille basée sur une relation entre l'intensité du signal et l'épaisseur ; et
dans lequel les N paires de sonde d'émission (2003) et de sonde de réception (2004) sont divisées en X groupes comprenant chacune Y sondes d'émission (2003) et Y sondes de réception (2004), dans lequel X multiplié par Y est N, dans lequel les sondes d'émission (2003) et les sondes de réception (2004) dans un même groupe effectuent des opérations de transmission et des opérations de réception de manière synchrone, et les X groupes de sondes de transmission (2003) et de sondes de réception (2004) fonctionnent dans une séquence de groupes prédéterminée.

2. Dispositif de détection d'épaisseur selon la revendication 1, dans lequel
les sondes d'émission (2003) comprennent des sondes d'émission ultrasonores; et
les sondes de réception (2004) comprennent des sondes de réception ultrasonores.

3. Dispositif de détection d'épaisseur selon la revendication 1, dans lequel la carte de circuit d'émission (2001) comprend en outre:
Y circuits de commande (2006), connectés aux Y sondes d'émission (2003) dans chacun des X groupes respectivement et configurés pour entraîner les sondes d'émission (2003) pour transmettre le signal de détection; et
un premier d'un-sur-X commutateur (2007), connecté aux X groupes de sondes d'émission (2003) et configuré pour activer les sondes d'émission (2003) dans l'un des X groupes simultanément dans la séquence de groupes prédéterminée.

4. Dispositif de détection d'épaisseur selon la revendication 3, dans lequel la carte de circuit de réception (2002) comprend en outre:
N circuits de pré-amplification (2008) connectés respectivement aux N sondes de réception (2004) et configurés pour effectuer une amplification préliminaire sur le nouveau signal de détection reçu par les sondes de réception (2004);
Y deuxième l'un des X commutateurs (2009) et Y circuits d'amplification et de mise en forme (2010), dans lesquels
chacun des deuxième l'un de X commutateurs (2009) est connecté à X des N circuits de pré-amplification (2008) et un des circuits d'amplification et de mise en forme Y (2010), et est configuré pour sélectionner la sonde de réception (2004) appartenant à un groupe de actuel des X sondes de réception (2004) connectées aux X circuits de pré-amplification (2008) dans la séquence de groupes prédéterminée; et
chacun des Y circuits d'amplification et de mise en forme (2010) est configuré pour effectuer un processus d'amplification et de mise en forme sur le nouveau signal de détection envoyé par les deuxièmes l'un des X commutateurs (2009) connectés au circuit d'amplification et de mise en forme (2010); et
un convertisseur AD (2011), connecté aux Y circuits d'amplification et de mise en forme (2010) et configuré pour effectuer une conversion AD sur le nouveau signal de détection envoyé par les Y circuits d'amplification et de mise en forme (2010) puis envoyer le nouveau signal de détection la conversion AD est effectuée sur le module d'analyse (2005).

5. Dispositif de détection d'épaisseur selon l'une quelconque des revendications 1, 3 et 4, dans lequel
le module d'analyse (2005) est en outre configuré pour déterminer qu'il existe une caractéristique anormale sur le support de feuille si l'intensité de signal du nouveau signal de détection ne se situe pas dans un intervalle d'intensité prédéterminé, la caractéristique anormale comprenant une déchirure, une rupture et un collé matière étrangère sur le support de feuille; ou
le module d'analyse (2005) est en outre configuré pour déterminer que le support en feuille est défectueux si une épaisseur moyenne du support en feuille n'est pas dans un intervalle d'épaisseur prédéterminé.
